# EUROPEAN PATENT SPECIFICATION

(11) **EP 0 930 593 B1**
(45) Date of publication and mention of the grant of the patent: **19.12.2001**
(21) Application number: 99201245.0
(22) Date of filing: 21.09.1995
(51) Int. Cl.: G08B 5/22

(54) **Paging**
Selektivruf
Appel sélectif

(30) Priority: 27.09.1994 US 313545
(43) Date of publication of application: 21.07.1999
(62) Divisional of application: 95306664.4
(73) Proprietor: SONY CORPORATION, Tokyo 141 (JP); SONY ELECTRONICS INC., Park Ridge, New Jersey 07656 (US); GENERAL MAGIC, INC., Sunnyvale, California 94086 (US)
(72) Inventor: Gruzen, Alexander, Redwood City, California 94062 (US); Onosaka, Kazunobu, Kanagawa-ken 253-0024 (JP); Mugura, Kazuto, Wimbledon, London SW19 6NT (GB); Fujii, Toshiya, 105 Menlo park CA 94025 (US); Libes, Michael, Seattle, Washington 98119 (US); Adams, Williams, Seattle, Washington 98119 (US); Lynch, Kevin, San Francisco, California 94109 (US); Tsuk, Robert, Cupertino, California 95014 (US)
(74) Representative: Cotter, Ivan John

(56) References cited:
- EP-A- 0 434 231
- EP-A- 0 458 563
- WO-A-94/03985
- GB-A- 2 263 569
- US-A- 5 212 721
- US-A- 5 387 904
- "PAGER AUTO-DIAL OPTION" IBM TECHNICAL DISCLOSURE BULLETIN, vol. 37, no. 1, 1 January 1994, page 571 XP000428886 NEW YORK US

## Description

This invention relates to paging. More particularly, but not exclusively, the invention relates to the use of radio frequency paging devices in computer systems, for instance portable computer systems.

Paging devices are widely accepted and used as a form of communication. The earliest pagers were simple receiving devices which would generate an audible tone when the user was paged. The user would then call a predetermined number to find out the message associated with the page. Typical paging devices today provide for alphanumeric paging which provides on a small display a telephone number or a short alphanumeric message. As computers have become smaller in size and therefore more portable, functions such as paging have been added to these computer devices.

European Patent Application Publication No. EP-A-0 434 231 discloses a computing device according to the pre-characterising part of claim 1 hereof.

According to a first aspect of the invention there is provided a computing device comprising a processor, a memory, a display, an input device, a telephone receiving and transmitting device, and a paging device comprising a receiver to receive a pager message;
characterised in that:
said processor is operative to compare the pager message to an identification of an electronic mail provider;
if said processor determines a match between the pager message and the identification of the electronic mail provider, said processor is operative to generate on the display an electronic mail display comprising a download button; and
if a user selects the download button using the input device, the telephone receiving and transmitting device dials a telephone number of the electronic mail provider to connect to the electronic mail provider and said processor issues commands to download the electronic mail to the memory.

According to a second aspect of the invention there is provided, a process for receiving notification and retrieval of electronic mail in a computing device comprising a processor, a memory, a display, an input device, a telephone receiving and transmitting device, and a paging device that can receive a pager message characterised by comprising the steps of:
receiving a pager message;
comparing the pager message to an identification of an electronic mail provider;
if there is a match between the pager message and the identification of the electronic mail provider, generating on the display an electronic mail display comprising a download button;
selecting the download button; and
upon selection of the download button, dialling a telephone number of the electronic mail provider via the telephone receiving and transmitting device to connect to the electronic mail provider and issuing commands to download the electronic mail to the memory.

According to a preferred embodiment described in detail hereinbelow, a user is notified of electronic mail which has arrived into the user's mailbox located on an electronic mail system. In this event, when a message is received, the electronic mail system generates a page notifying the user that there is a mail message waiting to be read. If the computing device is in a power on state, an icon appears, enabling the user to download the message from the electronic mail system by selecting the icon. The paging system responds to selection of the icon by dialling up the electronic mail system, accessing the electronic mail message, and downloading the message from the E-mail system to the computing device.

In addition, it is preferred that, when the device is in a power down state and a page is received, indicating that a message awaits the user, the paging device causes the computing device to go into a power on state and dial up the electronic mail system to automatically retrieve and download the message into the computing device memory for access by the user when the user subsequently turns the computing device on.

The invention will now be further described, by way of illustrative and nonlimiting example, with reference to the accompanying drawings, in which:
Figure 1 is an external representation of a device embodying the invention;
Figure 2 is a system block diagram which may be used in the device of Figure 1;
Figure 3 is an exemplary flow diagram of a process for downloading a portion of software for performing a paging function;
Figure 4 is a flow diagram describing the display of paging messages and, in particular, the look-up and display of telephone numbers and callers corresponding to those telephone numbers and an icon which enables the user to immediately dial up the sender of the page;
Figure 5, Figure 6, Figure 7, Figure 8, Figure 9, Figure 10, and Figure 11 illustrate exemplary generated displays;
Figure 12 and Figure 13 illustrate exemplary displays generated when a paging message is received regarding E-mail messages;
Figure 14a and 14b are tables which describes messages and display of phone numbers in response to pages received; and
Figure 15 is a flow chart illustrating exemplary steps for receiving electronic mail messages.

A portable computing device, which provides innovative paging functionality, is described. In the following description for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present description.

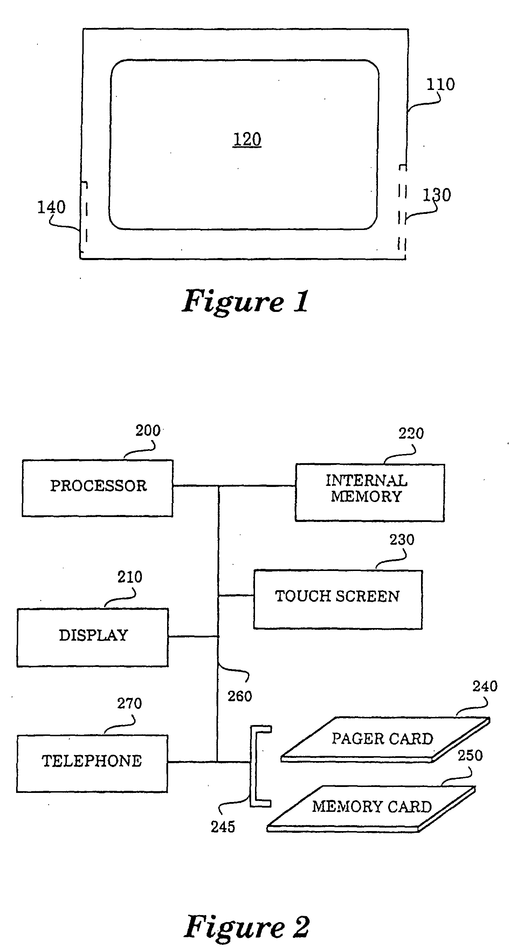

**Figure 1** is an illustrative drawing of a small computing device which includes innovative paging functions in accordance with embodiments of the invention. The device, 110, includes a display, 120, with a touch-sensitive screen, enabling the user to provide input to the device through the touch-sensitive screen. Also included are a plurality of input/output connectors 140, including a telephone jack to connect the telephone receiver and transmitting device located internal to the computing device 110 to a telephone network. This enables the device 110 to dial up and receive telephone calls. Also included is a slot 130 for receiving a memory card, such as a PCMCIA (Personal Computer Memory Card International Association) card. In the present invention, it is preferred that the paging device described herein is incorporated on a card that fits into the slot 130 and interfaces with the device 110 to provide the paging functionality described herein.

An exemplary block diagram of the system is shown in **Figure 2**. Processor 200, is coupled to internal memory 220, display 210, touch screen 230, and the PCMCIA slot, 245, which can receive and connect PCMCIA compatible cards such as an external memory card 250 or the pager card 240 described herein. These devices are coupled via a bus 260. Also coupled to the bus is a telephone receiving and transmitting device 270, which enables the device to communicate through the telephone network.

The pager card includes a receiver to receive paging transmissions and at least one light indicator to indicate status of the paging device, such as unread messages. The card includes local nonvolatile memory for storage of the software to control the paging card. In one embodiment of the present invention, a portion of the software is downloaded to the computing device internal memory for access by the processor when performing pager functions. The remaining portion continues to be stored in the nonvolatile memory of the pager card and is provided to the processor when needed to execute certain paging functions. Preferably the software is downloaded into non-volatile memory such that the software is maintained in memory when the processing device is in a non-volatile state.

The ability to download a portion of the pager card software provides for a number of distinct advantages. First, by downloading a portion of the software to the computing device local memory, that functionality embodied in the software is accessible without the pager card. This is important in small devices which only have one PCMCIA slot and need the memory slot for insertion of an expansion memory card. In the present embodiment, software to enable the user to send a page through the telephone network and software to display and read current paging messages previously received by the pager card are permanently downloaded to the computing device memory. The software to display paging messages includes bit mapped images of certain graphic objects used in the display. Substantial memory space is saved as the display is generated by reference to the graphic objects.

The software is developed to communicate with common objects and data as needed to provide the functionality desired. For example the page receiving software receives the page and generates the list of objects to be displayed. This is communicated, for example through a common database or via a message, to the pager display software which generates the display of the page message.

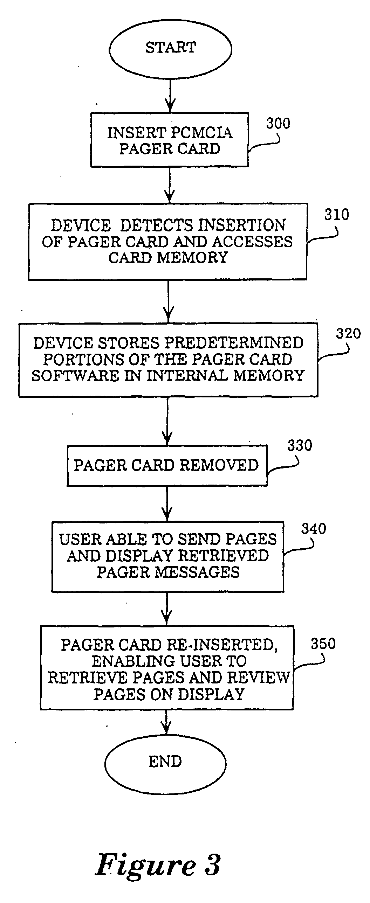

Figure 3 is an exemplary flow diagram of this process for downloading a portion of the software and accessing the software to provide the paging functions described herein. The flow diagram sets forth the functionality of the process. It is readily apparent to one skilled in the art that a variety of implementations may be generated using known programming techniques to perform the functionality described. Therefore, the details of such implementations will not be discussed herein. Referring to Figure 3, when the pager card is first inserted into the device, step 300, the device detects insertion of the pager card, and if the pager software is not stored in the device memory, accesses the card memory 310 to retrieve the portion of the software to perform certain paging operations without the paging hardware.
Preferably, control bits are provided in the software to tell the processor which portions of the code to download permanently to the processing device memory. The software downloaded is stored in internal memory, step 320, of the computing device. Thus, when the pager card is subsequently removed, for example in order to insert an extended memory card, step 330, certain portions of the software remain resident in the internal memory of the computing device. Therefore, selected functions are operable without the pager card. In the present embodiment, step 340, software to send pages and software to display retrieved pages are resident in the computing device and executable without the pager card. When the pager card is subsequently reinserted, step 340, the software functionality that is only resident on the pager card is accessible. In the present embodiment, the software to retrieve pages is stored in the pager card is executed, step 350, enabling the user to retrieve pages to be displayed on the display.

The pager software, whether resident on the pager card or stored in the computing device memory, communicates information among the executing paging processes, such as paging data representative of the message received, in order to provide seemingly seamless paging operations. For example, when the pager card is inserted into the computing device and a page is received, a first process executes the pager receiving code located in the pager card and a second process executes the pager display code stored in the memory of the computing device. One way contemplated to communicate data between processes operative from the pager card and processes operative from the computing device is to provide a message transfer capability in which data is communicated using a message handling system. Another way contemplated is to provide a shared memory that all the processes access to read and write the shared data. Other data sharing/communication techniques may also be used.

An additional feature is the ability to remove the pager card and limit the insertion of the card into the computing device to only when the user receives a page. Preferably, the pager card has LEDs indicating unread pages. In addition, a pager card may provide some audible mechanism to indicate unread pages. Thus, the user can remove the paging card from the device and insert another card, such as the extended memory card, to perform other operations, and when a page is subsequently received, as indicated by the visible or audible indicators on the pager card, the user can receive the page immediately by removing the memory card currently in the device and inserting the pager card to access the paging messages through the user interface of the computing device. The memory card can be subsequently reinserted once the user has read the page.

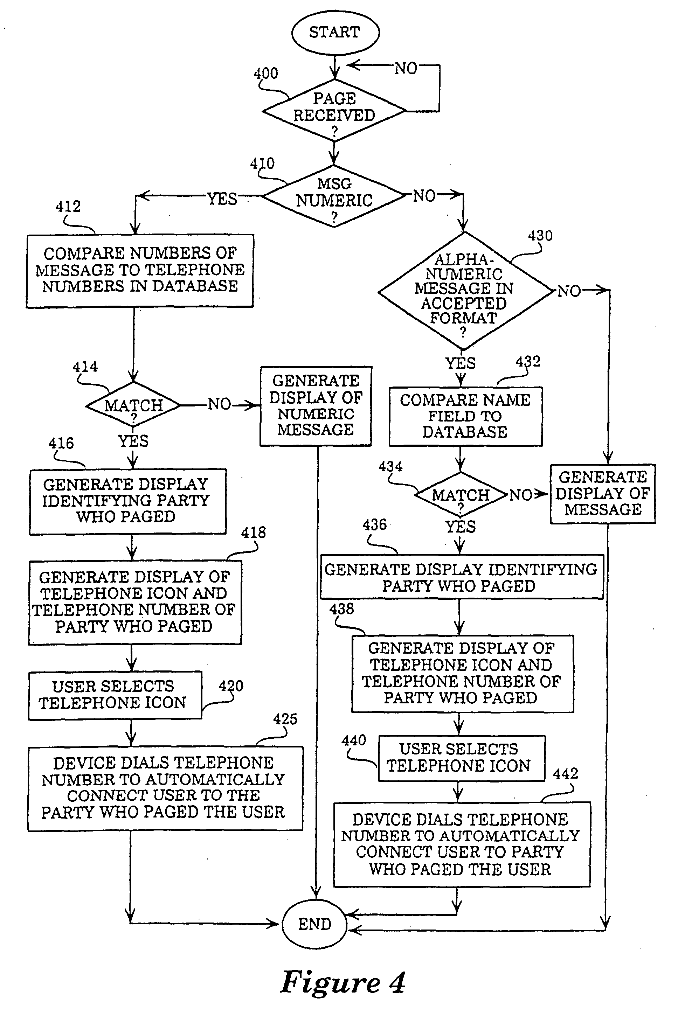

An innovative user interface for receiving messages and returning telephone calls is now described. Referring to Figure 4, one aspect of receiving pages is described. At step 400, when a page is received, the software will first determine whether the message is a numeric message or an alphanumeric message, step 410. If the message is numeric, step 412, the numbers of the message are compared to a database of names and telephone numbers to determine if the telephone number matches one contained in the user's database. This database may be a database maintained by the user, such as a telephone book, or the like.

If a match is found, step 414, a display is generated identifying the person who issued the page, as determined from the database, step 416. The display further provides the telephone number of the person who issued the page and a telephone icon in the proximity of the telephone number. This icon functions as a button that is selectable by the user, step 418. If the user selects the telephone icon, step 420, the device will automatically dial, step 425, the telephone number shown next to the button to connect the user immediately to the party who issued the page. Thus the process typically exercised when receiving a page, that is to immediately call back the party who sent the page, is easily performed through the user interface of the device without the need to proceed through additional menus or displays to select a telephone dial feature.

If, at step at 414, a match is not found, then the numeric message will be displayed and the user has the capability through other menus or functions on the computing device to dial the message to connect to the caller who placed the page. It is readily apparent that the interface may also provide a telephone icon with the number even though the number has not been found in the database, thereby enabling to user to automatically call the number set forth in the page. For example if the number of digits corresponds to that of a valid telephone number, the telephone button is displayed adjacent to the number, enabling the user to dial the number by selecting the button.

Referring back to step 410, if the message is alphanumeric, at step 430, it is determined whether the message is in an accepted format. One such format utilized in the paging services is "sendername I subject I content". It is readily apparent to one skilled in the art that other prespecified formats may be used in accordance with the teachings of the present invention. Thus, at step 430, if the message is in an accepted format, the sendername field is compared to the name fields in the database, step 432. If a match is found, step 434, a display is generated, identifying the person who issued the page, step 436, and further providing a telephone icon and a telephone number of the person who sent the page, step 438. Therefore, if the user chooses to contact the sender of the page, step 440, the user selects the telephone icon and, at step 442, the device dials the telephone number to automatically connect the user to the person who sent the page to the user. If, at step 434, no match is found, a display is generated of the user identifying the sender, the message content and the subject of the message.

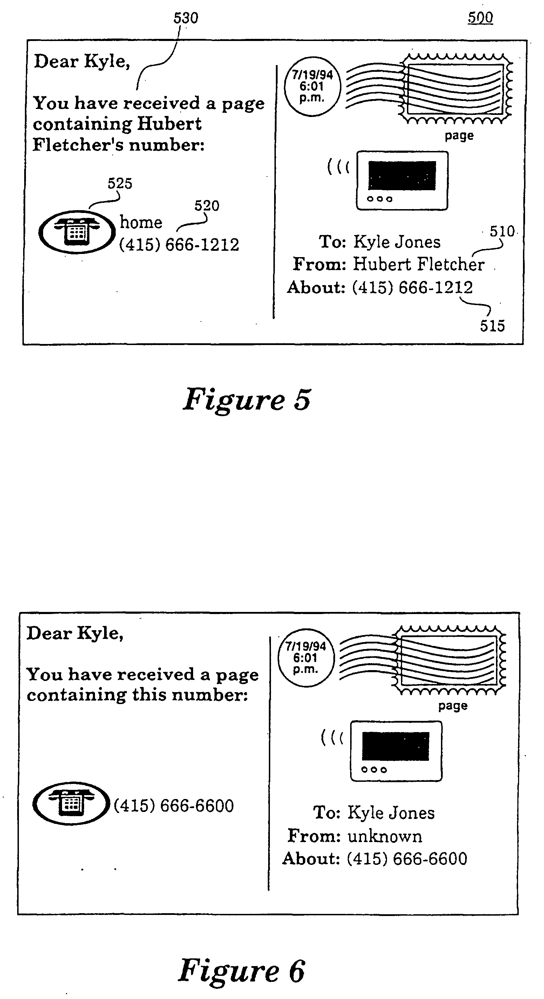

**Figure 5** illustrates an exemplary display 500 generated in response to receiving a numeric page consisting of a phone number which is found in the user's database. Thus, in this example, the sender of the page 510 and the telephone number 515 is identified to the user of the device. A message, 530, in the form of a note to the user, is further provided on the display to inform the user of the context of the page. In addition, the telephone number of the sender 520 is provided adjacent to a telephone icon 525. Thus, if the user wishes to call the sender of the page, he simply selects the telephone icon 525 and the device will automatically dial the telephone number. It is apparent to one skilled in the art that the icon shown in the drawings is exemplary and a variety of icons can be used to visually communicate the automatic dialing feature shown herein.

**Figure 6** illustrates an exemplary display when the telephone number is not found in the user's database. In this case, the sender of the page is not identified and the telephone number is provided adjacent to the telephone icon, enabling the user to contact the party who issued the page by selecting the telephone icon.

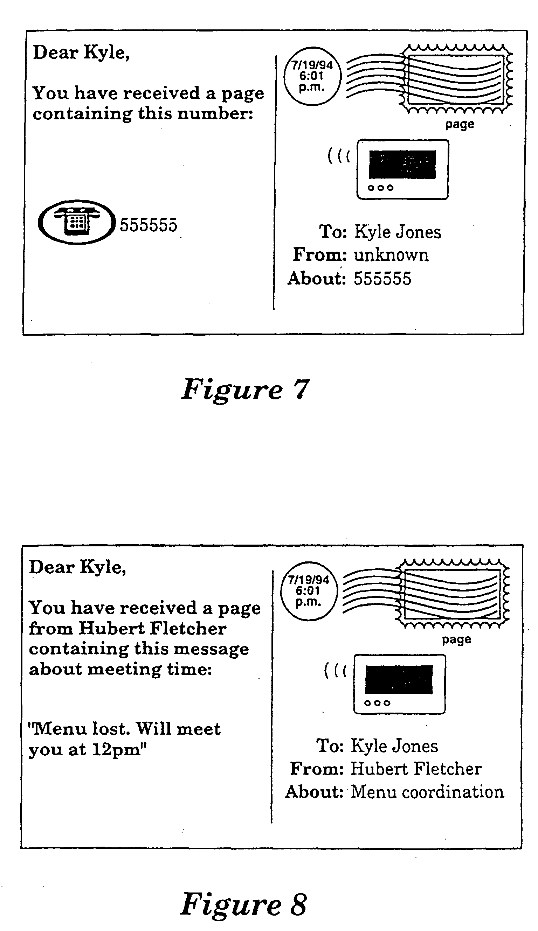

In the present embodiment, as shown in **Figure 7**, the telephone icon is provided if the numeric string received in the pager message is not verified to be a phone number. However, it is apparent that the system can be modified such that when a number is not in a format compatible with a telephone number, that the icon is not displayed and the user is not enabled to select the automatic telephone dialing feature.

**Figure 8** shows a message that was sent in the format sendername I subject I content. The database is first searched for the sendername. If a matching name is found, it is shown in the from field in its complete form as shown in the database. If it is not found in the database, the text as found in the sendername field is displayed unmodified. Thus, a partial name may be provided in the sendername field of the message and the person's complete name, as specified in the database, will show up on the display to the user. In addition, although not shown in Figure 8, the telephone with a default telephone number for the party, may be displayed along with the message provided in the page, enabling the user to dial the sender of the page. The default number may be, for example, the party's work telephone number. It is contemplated that the default number is established for each person in the database during the generation of the database.

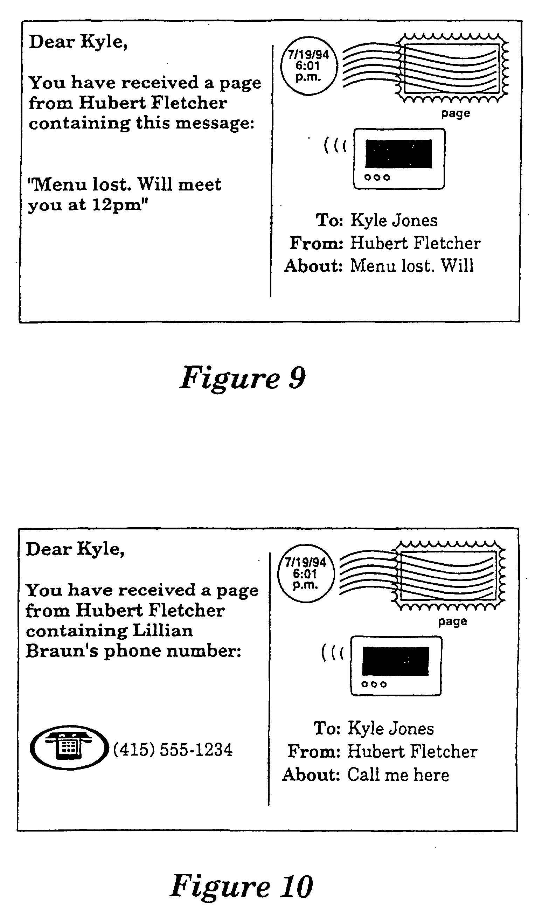

**Figure 9** illustrates a display in which no subject is provided in the subject field but the sendername and the message content is provided. Again, the database is searched for compatible sendername and displays that name in the from field of that display.

**Figure 10** shows an alphanumeric message in which the content of the message is a number, such as a telephone number. Thus, the number found in the message is used to compare to telephone numbers in the database to retrieve the name of the caller and the full telephone number. The telephone icon is displayed in proximity to the telephone number, indicating that the user can select the automatic dialing feature, thereby enabling the user to call the sender of the page at the identified telephone number.

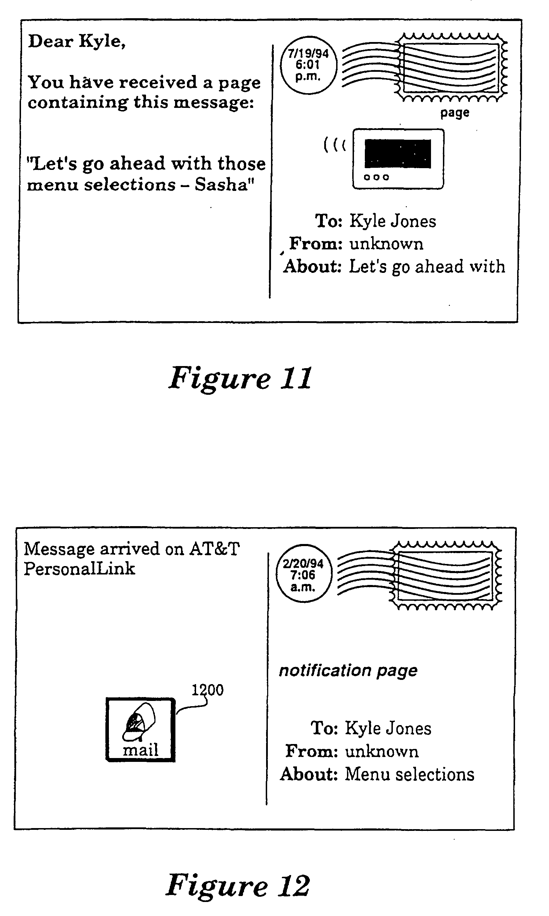

**Figure 11** shows one possible display when the alphanumeric page is not formatted. The system responds simply by displaying the alphanumeric message sent.

The structure of the database may be any data structure known to those skilled in the art which would be compatible with the device and the information to be contained in the database. For example, the database may be structured similar to a telephone directory in which the user's name, address, and telephone number is listed. More sophisticated systems would include additional fields for fax numbers and multiple telephone numbers and paging numbers. The paging functionality described herein uses the name and the telephone numbers provided for each name to do searches to identify the senders of paging messages.

The system also provides a paging mechanism when electronic mail (E-mail) arrives for the user. One such E-mail service which may be used is AT&T Personal Link^{SM}, provided by AT&T. Thus, when an E-mail message arrives, the AT&T Personal Link^{SM} system will issue a page to the user. The page indicates that there is an E-mail message waiting for the user. Preferably, an icon will be provided that when selected, the device will automatically dial up the E-mail service and access the E-mail message that is waiting for the user. **Figure 12** illustrates an exemplary selectable mail icon 1200, which enables the user to access the E-mail message.

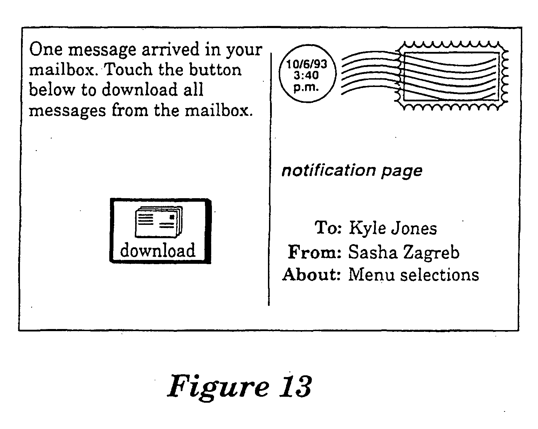

Another embodiment is shown in **Figure 13** in which a feature button referred to as "download" is utilized to download a message from the E-mail facility. As with the receipt of the page in the predetermined format, the sendername will be compared against the database to determine the sender's full name. If a match is found, then the full name of the sender will be identified from the database. Otherwise, the name as found in the sendername field is displayed unmodified.

In one embodiment, the provider of the E-mail services is included in the user's database such that when a page comes in, the sendername will match an entry in the database for an E-mail provider. In this manner, multiple E-mail providers can be accessed automatically. If the sendername is determined to be the name of an E-mail provider, the display generated will include a message that an E-mail has arrived, the sender of the E-mail and the subject of the E-mail. This information is extracted from the prespecified string, e.g., sendername I subject I content sent as the paging message. The display will also include an electronic mail icon which functions as a button to be selected by the user. When the user selects the button, the computing device dials up the e-mail provider and retrieves the message. In another embodiment, the processor examines the incoming message string before searching the database, to determine if the message contains a code indicative that the message is from an E-mail provider. If the message is from an E-mail provider, the display of the sender and subject of the E-mail and the download button is provided.

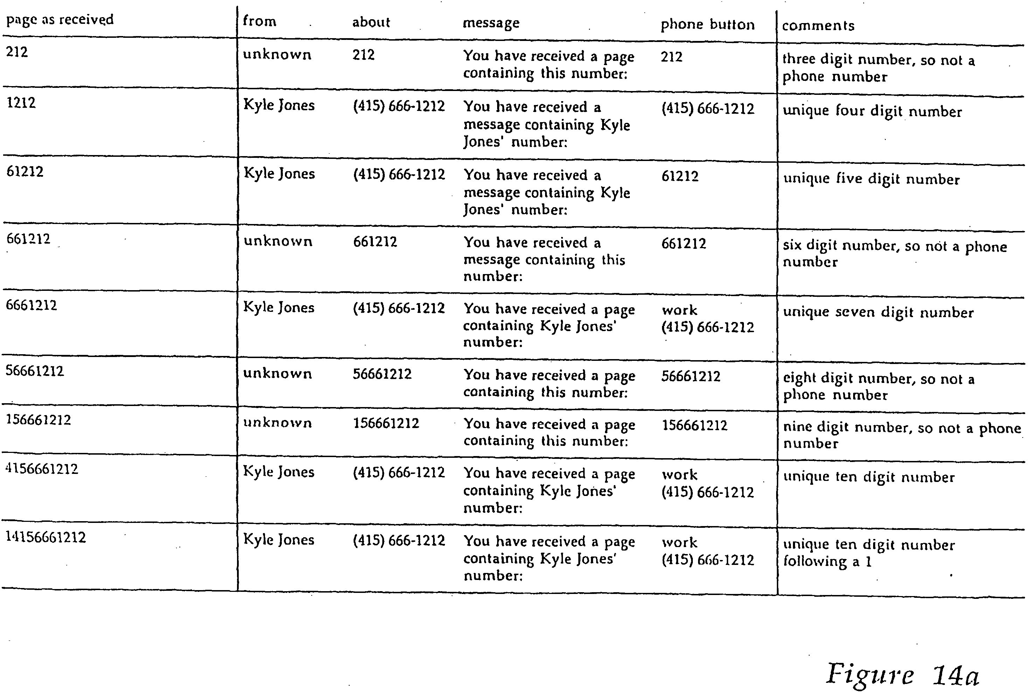

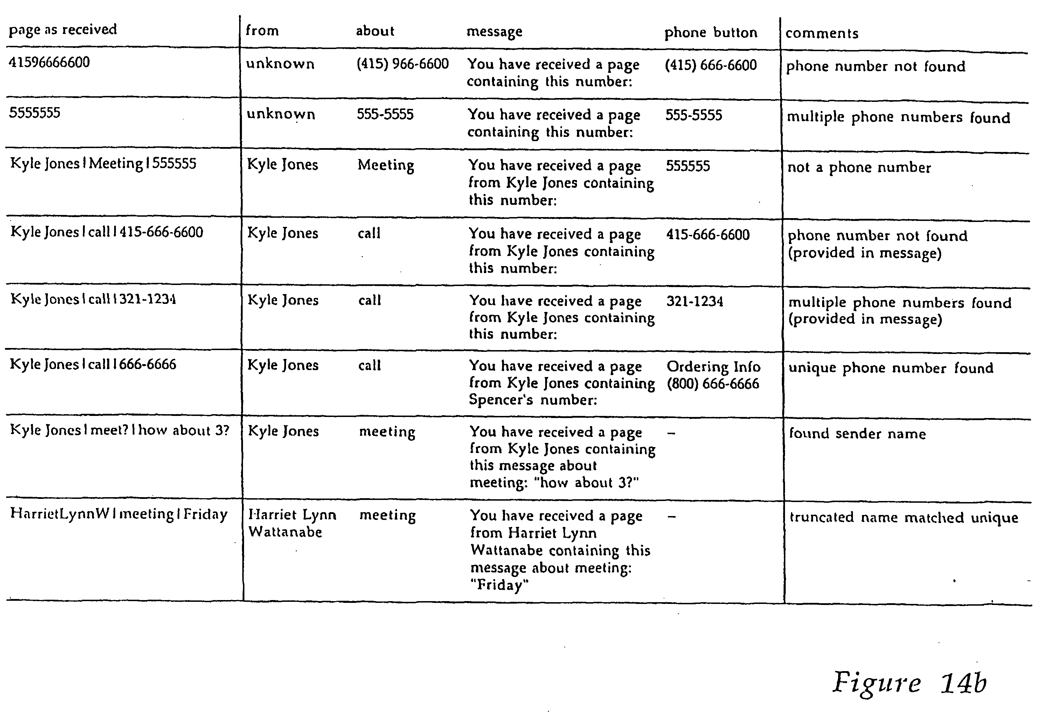

**Figures 14a** and **14b** are tables which describe various displays that are generated in response to paging messages that are received. The left column identifies the page as received; the 'from' column identifies the sender of the page; the 'about' column identifies the subject of the page; and the 'message' is that formed from the string received. If a match is found in the database or the telephone numbers provided as part of the message, a telephone number is displayed with the telephone icon in order to enable the user to dial the sender of the page. In one embodiment the pager provides additional functionality by retrieving a user's E-mail messages when the device is in a power down or sleep state.

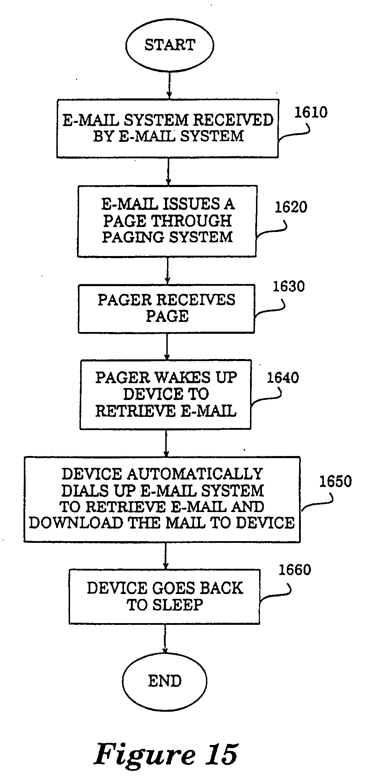

This process is generally described with reference to **Figure 15**. Referring to Figure 15, at step 1610, when an E-mail is received by an E-mail system, at step 1620, the E-mail system issues the page through the paging system. At step 1630, the pager receives the page indicating that E-mail is waiting for the user. The pager determines that the message is from an E-mail provider. This is preferably determined from the format of the message, for example, the sendername field. At step 1640, the pager wakes up the computing device to retrieve the E-mail. Preferably this is accomplished by the pager card issuing a wakeable interrupt signal to the computing device. The computing device is then powered up and, at step 1650, the device determines the telephone number of the E-mail provider from the page message, automatically dials the E-mail system to retrieve the E-mail and downloads the E-mail message onto the computing device such that the E-mail message is available to the user when the user subsequently accesses the computing device. At step 1660, once the download of the E-mail message is complete, the device then returns back to the sleep mode to conserve power.

The invention has been described in conjunction with the preferred embodiment. It is evident that numerous alternatives, modifications, variations and uses will be apparent to those skilled in the art in light of the foregoing description.

## Claims

1. A computing device comprising a processor (200), a memory (220), a display (210), an input device (230), a telephone receiving and transmitting device (270), and a paging device (240) comprising a receiver to receive a pager message;
**characterised in that**:
said processor (200) is operative to compare the pager message to an identification of an electronic mail provider;
if said processor (200) determines a match between the pager message and the identification of the electronic mail provider, said processor is operative to generate on the display (210) an electronic mail display comprising a download button; and
if a user selects the download button using the input device (230), the telephone receiving and transmitting device (270) dials a telephone number of the electronic mail provider to connect to the electronic mail provider and said processor (220) issues commands to download the electronic mail to the memory (220).

2. A computing device as set forth in claim 1, which comprises a wakeup device responsive to the computing device being in a power down state to power up the computing device to receive the electronic mail message, whereupon said processor (200) compares the pager message to the identification of the electronic mail provider and, if said processor determines a match between the pager message and the identification of the electronic mail provider, said processor causes the telephone receiving and transmitting device (270) to dial up the electronic mail provider and download the electronic mail to the memory (220) whereby the mail is readily available to the user.

3. A process for receiving notification and retrieval of electronic mail in a computing device comprising a processor (200), a memory (220), a display (210), an input device (230), a telephone receiving and transmitting device (270), and a paging device (240) that can receive a pager message, **characterised by** comprising the steps of:
receiving a pager message;
comparing the pager message to an identification of an electronic mail provider;
if there is a match between the pager message and the identification of the electronic mail provider, generating on the display (210) an electronic mail display comprising a download button;
selecting the download button; and
upon selection of the download button, dialling a telephone number of the electronic mail provider via the telephone receiving and transmitting device (270) to connect to the electronic mail provider and issuing commands to download the electronic mail to the memory (220).

4. A process as set forth in claim 3, wherein, if the device is in a power down state, said process further comprises the steps of:
powering up the computing device; receiving the electronic mail message;
comparing the pager message to the identification of the electronic mail provider; and
if there is a match between the pager message and the identification of the electronic mail provider, dialling up the electronic mail provider and downloading the electronic mail to the memory (220) whereby the mail is readily available to the user.

## Patentansprüche

1. Rechenvorrichtung mit einem Prozessor (200), einem Speicher (220), einem Display (210), einer Eingabevorrichtung (230), einem Fernsprechempfangs- und Sendegerät (270) und einem Paging-Gerät (240), das einen Empfänger für den Empfang einer Pager-Nachricht aufweist,
**dadurch gekennzeichnet,**
**daß** der Prozessor (200) die Pager-Nachricht mit der Identifikation eines Providers für elektronische Post (E-Mail-Provider) vergleicht,
**daß** der Prozessor (200) - falls er eine Übereinstimmung zwischen der Pager-Nachricht und der Identifikation E-Mail-Providers feststellt - auf dem Display (210) die Anzeige einer elektronischen Nachricht (E-Mail) erzeugt, die eine Schaltfläche für das Herunterladen enthält,
und **daß** das Fernsprechempfangs- und Sendegerät (270) - falls der Benutzer unter Verwendung der Eingabevorrichtung (230) die Schaltfläche für das Herunterladen auswählt - eine Fernsprechnummer des E-Mail-Providers anwählt, um eine Verbindung mit dem E-Mail-Provider herzustellen, und der Prozessor (220) Befehle ausgibt, um die E-Mail in den Speicher (220) herunterzuladen.

2. Rechenvorrichtung nach Anspruch 1 mit einer Aufweckvorrichtung, die auf die im Abschaltzustand befindliche Rechenvorrichtung anspricht, um die Rechenvorrichtung für den Empfang der E-Mail-Nachricht einzuschalten, woraufhin der Prozessor (200) die Pager-Nachricht mit der Identifikation des E-Mail-Providers vergleicht und - falls der Prozessor eine Übereinstimmung zwischen der Pager-Nachricht und der Identifikation des E-Mail-Providers feststellt - das Fernsprechempfangs- und Sendegerät (270) veranlaßt, den E-Mail-Provider anzuwählen und die E-Mail in den Speicher (220) herunterzuladen, so daß die Mail für den Benutzer leicht verfügbar ist.

3. Verfahren zum Empfangen einer Meldung und zum Abrufen einer E-Mail in einer Rechenvorrichtung mit einem Prozessor (200), einem Speicher (220), einem Display (210), einer Eingabevorrichtung (230), einem Fernsprechempfangs- und Sendegerät (270) und einem Paging-Gerät (240), das eine Pager-Nachricht empfangen kann,
**gekennzeichnet durch** die Verfahrensschritte:
Empfangen einer Pager-Nachricht,
Vergleichen der Pager-Nachricht mit der Identifikation eines E-Mail-Providers,
falls Übereinstimmung zwischen der Pager-Nachricht und der Identifikation des E-Mail-Providers besteht, Erzeugen einer E-Mail-Anzeige auf dem Display (210), die eine Schaltfläche für das Herunterladen aufweist,
Auswählen der Schaltfläche für das Herunterladen und
beim Wählen der Schaltfläche für das Herunterladen Anwählen einer Fernsprechnummer des E-Mail-Providers über das Fernsprechempfangs- und Sendegerät (270), um eine Verbindung mit dem E-Mail-Provider herzustellen und Ausgeben von Befehlen für das Herunterladen der E-Mail in den Speicher (220).

4. Verfahren nach Anspruch 3,
mit den folgenden Verfahrensschritten für den Fall, daß die Vorrichtung sich in einem Abschaltzustand befindet:
Einschalten der Rechenvorrichtung,
Empfangen der E-Mail-Nachricht,
Vergleichen der Pager-Nachricht mit der Identifikation des E-Mail-Providers und
falls Übereinstimmung zwischen der Pager-Nachricht und der Identifikation des E-Mail-Providers besteht, Anwählen des E-Mail-Providers und Herunterladen der E-Mail in den Speicher (220), so daß die Mail für den Benutzer leicht verfügbar ist.

## Revendications

1. Dispositif d'ordinateur comprenant un processeur (200), une mémoire (220), un affichage (210), un dispositif d'entrée (230), un dispositif d'émission et de réception téléphonique (270) et un dispositif d'appel de personne (240) comprenant un récepteur pour recevoir un message d'appel de personne ;
**caractérisé en ce que** :
ledit processeur (200) est fonctionnel pour comparer le message d'appel de personne à une identification d'un fournisseur de courrier électronique ;
si ledit processeur (200) détermine une correspondance entre le message d'appel de personne et l'identification du fournisseur de courrier électronique, ledit processeur est fonctionnel pour générer sur l'affichage (210) un affichage de courrier électronique comprenant un bouton de téléchargement ; et
si un utilisateur sélectionne le bouton de téléchargement en utilisant le dispositif d'entrée (230), le dispositif d'émission et de réception téléphonique (270) compose un numéro de téléphone du fournisseur de courrier électronique pour une connexion au fournisseur de courrier électronique et ledit processeur (220) délivre des commandes pour télécharger le courrier électronique dans la mémoire (220).

2. Dispositif informatique selon la revendication 1, qui comprend un dispositif de réveil sensible à un dispositif informatique étant en état de veille pour remettre sous tension le dispositif informatique pour recevoir le message de courrier électronique, après quoi ledit processeur (200) compare le message d'appel de personne à l'identification du fournisseur de courrier électronique et, si ledit processeur détermine une correspondance entre le message d'appel de personne et l'identification du fournisseur de courrier électronique, ledit processeur force le dispositif d'émission et de réception (270) à composer le numéro du fournisseur de courrier électronique et à télécharger le courrier électronique dans la mémoire (220) de sorte que le courrier est facilement disponible pour l'utilisateur.

3. Procédé pour notifier la réception et la récupération du courrier électronique, dans un dispositif informatique comprenant un processeur (200), une mémoire (220), un affichage (210), un dispositif d'entrée (230), un dispositif d'émission et de réception téléphonique (270), et un dispositif d'appel de personne (240) qui peut recevoir un message d'appel de personne, **caractérisé en ce qu'**il comprend les étapes de :
réception d'un message d'appel de personne ;
comparaison du message d'appel de personne à une identification d'un fournisseur de courrier électronique ;
s'il y a une correspondance entre le message d'appel de personne et l'identification du fournisseur de courrier électronique, génération sur l'affichage (210) d'un affichage de courrier électronique comprenant un bouton de téléchargement ;
sélection du bouton de téléchargement ; et
lors de la sélection du bouton de téléchargement, composition d'un numéro de téléphone du fournisseur de courrier électronique via le dispositif d'émission et de réception téléphonique (270) pour une connexion au fournisseur de courrier électronique et fourniture des commandes pour télécharger le courrier électronique dans la mémoire (220).

4. Procédé selon la revendication 3, dans lequel, si le dispositif est dans un état de veille, ledit traitement comprend en outre les étapes de :
mise sous tension du dispositif informatique ;
réception du message de courrier électronique ;
comparaison du message du dispositif d'appel de personne à l'identification du fournisseur de courrier électronique ; et
s'il y a une correspondance entre le message d'appel de personne et l'identification du fournisseur de courrier électronique, composition du numéro du fournisseur de courrier électronique et téléchargement du courrier électronique de la mémoire (220) de sorte que le courrier est facilement disponible pour l'utilisateur.
